# DEMANDE DE BREVET EUROPEEN

(11) **EP 4 163 515 A1**
(43) Date de publication de la demande: **12.04.2023**
(21) Numéro de dépôt: 22199911.3
(22) Date de dépôt: 05.10.2022
(51) Int. Cl.: F16F 15/131, F16F 15/134, F16F 15/12, F16F 15/315

(54) **VOLANT D'INERTIE ASSEMBLE AVEC DEUX MATERIAUX**

(30) Priorité: 05.10.2021 FR 2110544
(71) Demandeur: VALEO EMBRAYAGES, 80009 Amiens (FR)
(72) Inventeur: CATURLA, Pablo, 28947 Fuenlabrada (ES); PANIAGUA, Adrian, 28947 Fuenlabrada (ES); NOULLET, Alexandre, 28947 Fuenlabrada (ES)
(74) Mandataire: Valeo Powertrain Systems

(57) **Abrégé**

L'invention concerne un volant d'inertie (3) assemblé pour un module amortisseur de torsion, d'axe (X), comprenant:
- un organe central (10) d'entrée de couple, d'axe (X), destiné à être connecté à un vilebrequin (1), et
- un organe périphérique (20) d'inertie, de forme annulaire, à l'intérieur duquel est logé l'organe central (10), les organes central (10) et périphérique (20) d'inertie étant
réalisés dans des matériaux (M1, M2) différents et
rapportés solidairement ensemble,
à la fois de manière à réduire la masse et à augmenter l'inertie résultantes du volant d'inertie.

## Description

L'invention se rapporte au domaine des chaînes de transmissions pour engin de mobilité, par exemple un poids lourd, un véhicule agricole, de transport en commun ou même hybride. L'invention concerne un volant d'inertie assemblé de plusieurs pièces, notamment un volant rigide type moteur. L'invention concerne également un module amortisseur de torsion comprenant un tel volant d'inertie, ainsi qu'un procédé de fabrication d'un tel volant d'inertie assemblé.

Le DE10201110211 illustre un tel module amortisseur de torsion pour une chaîne de transmission, ayant un volant moteur et un mécanisme d'embrayage, destiné à la fois à déplacer un plateau de pression et à mettre sélectivement en prise un disque d'embrayage entre le plateau de pression et le volant moteur. Ces volants connectés à l'arbre moteur, sont des disques monoblocs, rigides et massifs, compris entre 5 et 15 kg par volant, et de formes complexes ayant des portions de fortes et de faibles épaisseurs. Ils sont en fonte et lourds à manipuler. De multiples fonctions sont exigées par volant moteur, ce dernier participant au démarrage, à l'embrayage, à la transmission de couple et à l'amortissement des chocs, vibrations des acyclismes en amont de la boîte de vitesses. Les exigences des constructeurs diffèrent, ce qui conduit à diverses géométries des volants, répondant aux différents besoins élevés en encombrement, régime moteur, irrégularités de torsion, inertie et rendement en énergie.

Une solution est d'accroitre le diamètre extérieur de tels volants, pour répartir leur masse au plus loin de l'axe de rotation, dès lors leur inertie est accrue. Mais plus leur masse est élevée, plus on consommera de carburant, au détriment du rendement, lors du fonctionnement sur véhicule. Et les possibilités de concevoir des volants d'inertie optimisés - avec une inertie élevée et une masse faible selon les besoins - sont limitées par l'espace libre délimité entre le moteur (vilebrequin) et le mécanisme d'embrayage.

Par ailleurs, le remplacement (seconde monte) de chaque volant moteur nécessite de les reproduire en faible quantité, ce qui est dispendieux au vu des changements d'étapes, d'outillage. D'où le besoin de standardiser au maximum en production ces volants d'inertie, et d'éviter les sources d'erreur et des taux de rébus par volant.

L'invention a pour objet de répondre au moins en grande partie aux problèmes précédents et de conduire en outre à d'autres avantages, à la fois pour simplifier la conception du volant et garantir une inertie élevée et une masse faible.

L'invention propose selon un premier aspect, un volant d'inertie assemblé pour un module amortisseur de torsion, comprenant :
- un organe central d'entrée de couple, d'axe X, destiné à être connecté à un vilebrequin, et
- un organe périphérique d'inertie, de forme annulaire, à l'intérieur duquel est logé l'organe central, de telle manière que les organes central et périphérique d'inertie soient alignés radialement entre eux,
les organes central et périphérique d'inertie étant réalisés dans des matériaux différents et étant rapportés solidairement ensemble, à la fois de manière à réduire la masse et à augmenter l'inertie résultantes du volant d'inertie.

On réalise, à l'inverse aux volants monoblocs (de l'art antérieur), un volant d'inertie assemblé d'un ensemble de deux organes distincts (pré)assemblés, chacun ayant des propriétés mieux adaptées à la fonction qui lui est dédiée. En réalisant distinctement chacun de ces organes, on définit un volant d'inertie assemblé multibloc, ayant :
- un ratio masse / inertie plus optimisé, autrement dit, une masse réduite pour un volume donné et qui offre une inertie plus élevée pour l'ensemble du volant assemblé - en raison d'une différence de matériaux entre organes - et
- des parties standardisée et modulable - en raison du choix de chaque organe définissant le volant d'inertie.

Dès lors, leur fabrication est simplifiée, une même gamme d'outillage étant réutilisable pour divers volants d'inertie assemblés. On évite les erreurs et rébus. Les coûts sont réduits.

Par partie « standardisée », on entend qu'au moins une partie d'organe soit conçue indépendant du moteur ou de la géométrie des pièces avoisinantes (vilebrequin, mécanisme d'embrayage). Les pièces sont alors dites normées ou identiques. Ses caractéristiques (formes, dimensions identiques) sont systématiquement les mêmes en production, quel que soit les besoins constructeurs. On simplifie et on standardise ces mêmes organes pour tous les volants d'inertie assemblés (par exemple matriçage par un même moule), indépendamment des exigences des constructeurs.

Par partie « modulable », on entend au moins une partie d'organe qui :
- soit ajustable, non standard - qui soit spécifiquement conçue et adaptée à un type donné de moteur - notamment selon la géométrie : du vilebrequin et/ou du mécanisme d'embrayage. Ses caractéristiques (formes, dimensions prédéterminées) s'en trouveront toujours modifiées en production pour les besoins constructeurs ;
- respecte les exigences (dimensions, montage, inertie) des anciens volants rigides monoblocs. Dès lors, le remplacement (type seconde monte, en cas de détérioration) de tout type de volants d'inertie est possible.

Enfin, le choix d'un organe (matériau, dont masse ; forme, dont géométrie, volume, interfaces), permet d'optimiser certaines de ses fonctions, par exemple : inertie résultante, filtration des vibrations, encombrement, etc. La différence de matériaux, détaillée par suite, concerne par exemple différentes masses volumiques (liées à l'inertie). Par « organe », on entend un seul et même élément monobloc.

Pour rappel, la masse volumique d'un corps (dit densité) est égale à la masse du corps multipliée par son volume.

Un tel volant d'inertie assemblé, conforme au premier aspect de l'invention, peut présenter l'une ou l'autre des caractéristiques décrites ci-dessous, combinées entre elles ou prises indépendamment les unes des autres :
- Le matériau à partir duquel est réalisé l'organe périphérique d'inertie, peut être :
   - de masse volumique 1,5 fois supérieure ou égale à celle du matériau de l'organe central. Cet écart accroit la masse sur l'extérieur du volant. Sa rotation est don portée plus rapidement au démarrage (par exemple au-delà de 550 tr/ min). L'inertie résultant est plus élevée ;
   - de masse volumique deux fois supérieure à celle de l'organe central, en particulier 2,5 fois supérieure pour de hautes différences de vitesses en rotation entre le moteur et la boîte de vitesses.
   - un matériau ferreux, par exemple dans un alliage fer-carbone ;
   - en variante, un matériau non ferreux, par exemple tous types de métaux et alliages exempte de fer ;
- A titre d'exemple, l'organe périphérique d'inertie peut être réalisé :
   - en fonte. On entend ici tout alliages du fer riche en carbone (2 % à 6,67 %), sous forme de lamelles de graphite ;
   - dans un matériau de masse volumique comprise entre 6,8 à 7,4 ;
   - en variante, en acier, notamment moulé ou en tôle. D'où une dureté et un allongement à la rupture renforcée.
   - dans un matériau d'une masse volumique comprise entre 7.3 à 7.8 g/cm3, par exemple pour l'acier ;
- Le matériau à partir duquel est réalisé l'organe central, peut être :
   - un matériau ferreux, par exemple dans un alliage fer-carbone, en particulier en fonte ;
   - en variante, un matériau non ferreux, par exemple tout type d'aluminium, en particulier en aluminium forgé. D'où un gain de poids, de meilleures usinabilité et tenue à la corrosion ;
   - dans un matériau d'une masse volumique comprise entre 2.6 et 2.9 g/cm3, par exemple pour l'aluminium ;
- A titre d'exemple, l'organe périphérique d'inertie peut comprendre :
   - un volume strictement supérieure à celui de l'organe central. Ce qui accentue la masse en périphérie dudit volant, et consécutivement l'inertie résultante ; et/ou
   - une épaisseur strictement supérieure à celle de l'organe central. L'avantage est d'accroitre les volume et/ou masse sur l'extérieur du volant (de l'organe périphérique d'inertie), au plus loin de l'axe X, de sorte à augmenter l'inertie résultante du volant. Notamment, l'intérieur du volant peut être davantage amincie ; et/ou
   - une forme allongée, notamment une géométrie en périphérie externe bien plus allongée que celle de l'organe central. On répartit ici alors sa masse au plus loin de l'axe X. Dès lors la géométrie périphérique extérieure de l'organe périphérique d'inertie est bien plus allongée et accentuée que l'organe central. Par exemple, le diamètre extérieur de l'organe périphérique d'inertie peut être deux fois supérieure ou égale à celui de l'organe central.
- L'épaisseur de chaque organe peut être strictement supérieure à 5,5 mm ;
- L'organe central peut
   - être un moyeu ou une rondelle de guidage ; et/ou
   - être loger intégralement à l'intérieur de l'organe périphérique d'inertie ; et/ou
   - comprendre un diamètre externe
      - inférieur au diamètre interne des moyens de retenue de l'organe périphérique d'inertie ; et/ou
      - supérieur, ou en variante, inférieur, au diamètre interne de l'organe périphérique d'inertie ;
- L'organe périphérique d'inertie peut entourer l'organe central d'entrée de couple, et peut notamment ;
   - être adapté à recevoir une couronne dentée rapportée ;
   - comprendre une couronne dentée rapportée
   - être une masse d'inertie. En particulier, une masse d'inertie principale du volant ;
- Avantageusement, l'organe central peut comprendre :
   - une partie externe standardisée, adaptée à être lier solidairement à l'organe périphérique d'inertie, et
   - une partie interne ajustable, adaptée à être lier solidairement à l'extrémité du vilebrequin,
   Cette conception d'organe central comprend ainsi une partie interne modulable - en fonction des spécifications géométriques du moteur, notamment de son vilebrequin - et une partie externe standardisée, qui:
   - est simple à répliquer et ce en un temps réduit, quel que soit le type de moteur,
   - comprend des points de contact, qui coopère avec n'importe quel organe périphérique d'inertie. Aucun changement d'outillage n'est nécessaire pour les fabriquer, l'encombrement est réduit ;
   - comprend un même nombre de moyens de fixation, notamment de rivets fixant lesdits organes.
- L'organe central peut être notamment réalisé sous la forme d'un moyeu ou d'une rondelle de guidage ;
- La partie interne ajustable de l'organe central peut former une interface de montage (dite première interface), adaptée à recevoir l'extrémité du vilebrequin. La partie externe standardisée de l'organe central peut recevoir l'organe périphérique d'inertie, notamment les moyens de positionnement et/ou les moyens de fixation dudit organe ;
- Avantageusement, l'organe périphérique d'inertie peut réaliser plusieurs fonctions, en comprenant en outre :
   - une interface moteur de support, adapté à recevoir une couronne de démarreur ou un anneau de synchronisation, et
   - une masse formant l'inertie principale fonctionnelle dudit volant d'inertie assemblé.
- L'organe périphérique d'inertie peut comprendre en outre
   - une interface d'amortissement, adaptée à recevoir un système d'amortissement primaire, notamment en logeant au moins en partie des ressorts d'amortissement du système d'amortissement primaire. Dès lors, ce volant d'inertie assemblé est un volant d'inertie primaire d'un double volant amortisseur ;
   - ou en variante, une interface d'embrayage, adaptée à coopérer avec un mécanisme d'embrayage, en étant notamment pourvue d'une zone de friction apte à coopérer avec un disque d'embrayage. Dès lors, ce volant d'inertie assemblé est un volant rigide ;

Dans tous les cas,
- Au moins une partie de l'interface d'embrayage peut être délimité depuis l'interface moteur de support. L'interface d'embrayage, et notamment la zone de friction, peut être délimitée radialement entre l'interface moteur de support et les moyens de positionnement de l'organe périphérique d'inertie ;
- L'organe périphérique d'inertie peut comprendre en outre au moins l'une ou l'autre des caractéristiques suivantes:
   - une fenêtre centrale à l'intérieur de laquelle est logé au moins en partie l'organe central. On limite l'encombrement, puisque les organes sont contenus dans un même plan P du volant d'inertie assemblé ;
   - une couronne d'inertie, issue de matière avec l'organe périphérique d'inertie, pour augmenter son inertie ;
   - une couronne de démarreur, notamment rapportée et dentée, pour supporter l'effort de démarrage du vilebrequin ;
- Avantageusement, les organes central et périphérique d'inertie peuvent comprendre chacun des moyens de positionnement et de fixation coopérant conjointement, de manière à les fixer solidairement ensemble ;
- Il est possible de réaliser les moyens de positionnement des organes par complémentarité de formes, ce qui simplifie leur montage. Au moins certains des moyens de positionnement de chaque organe peuvent présenter :
   - une première surface d'appui axial,
   - une surface cylindrique qui est axialement bordée par d'une part, la première surface d'appui axial, et d'autre part une seconde surface d'appui d'un moyen de fixation ;
- Avantageusement, les moyens de fixation desdits organes peuvent être réalisés de manière :
   - démontable, par exemple par coopération de formes et/ou insertion d'une série de vis, boulons ou rivets. D'où un remplacement ciblé d'un organe détérioré. On évite de remplacer la totalité des organes constituant le volant ; ou
   - en variante, indémontable, par exemple par renflement obtenu par refoulement de matière d'un organe en direction de la première surface d'appui axial correspondante. Ainsi cet assemblage d'organes ne nécessite pas de pièces supplémentaires, tel que des rivets, pour assurer le maintien en position d'un organe sur l'autre organe ;
- Au moins certains des moyens de fixation peuvent être rapportés ou issus de matière d'au moins l'un des organes ;
- Au moins l'un des moyens de fixation peut être une série de vis, boulons ou rivets de fixation. Au moins l'un des moyens de fixation peut être un orifice traversant, recevant par exemple un(e) vis, boulon ou rivet de fixation ;
- En variante, au moins l'un des moyens de fixation d'un organe, notamment central, peut être un renflement obtenu par refoulement de matière dudit organe en direction de la première surface d'appui axial correspondante. Les organes sont faciles et rapides à monter, une simple déformation de l'un permettant d'assurer le maintien de l'autre ;
- Le renflement comporte de la fonte, notamment de la fonte vermiculaire ou sphéroïdale. La fonte présente en effet une bonne ductilité, notamment meilleure que l'acier, ce qui favorise la réalisation du renflement. Selon un mode de réalisation, le renflement, et notamment l'organe central, est en fonte, notamment en fonte vermiculaire ou sphéroïdale. Lorsque le refoulement est local, la réalisation d'un refoulement local sur de la fonte réduit grandement le risque de fissure sur l'organe central et on évite des déformations de la surface cylindrique. La réalisation du renflement est simple et la pression nécessaire pour réaliser le refoulement peut également être diminuée ;
- Au moins certains des moyens de positionnement des organes central et périphérique d'inertie peuvent coopérer conjointement par coopération de formes, notamment par emboitement, ou par emmanchement. Diverse formes de moyens de retenue sont possibles, pour assurer une liaison fixe, simple et efficace des organes, sans risque de rupture ou de décrochage en cas d'inertie importante.

En outre, des moyens de positionnement peuvent être formés :
- depuis le prolongement de la zone de friction de l'organe périphérique d'inertie, et/ou;
- sur la périphérie radialement interne de l'organe périphérique d'inertie; et/ou
- sur la périphérie radialement externe de l'organe central;

- Au moins certains moyens de positionnement d'au moins un des organes central et/ou périphérique d'inertie sont réalisés sous forme de :
   - lobes ou pattes pourvue chacune d'au moins un orifice, l'au moins un orifice formant les moyens de fixation ; et/ou
   - couronne de centrage, pourvue par exemple d'orifices formant les moyens de fixation. Les lobes ou pattes de fixation d'un organe ont des formes agencées pour recevoir des moyens de retenue d'un autre organe ; et/ou
   - de logement additionnel, comprenant notamment une portée de centrage cylindrique et une surface d'appui axial discontinue, à l'intérieur duquel sont reçus d'autres moyens de positionnement, ou
   - crochets de verrouillage, coopérant par complémentarité de formes pour former les moyens de fixation.
- Une couronne annulaire est continue, de centre l'axe X, afin de centrer manuellement lesdits organes lors du montage, sans besoin d'outillage particulier. En particulier, ladite couronne annulaire peut:
   - être de forme cylindrique ou conique ; et/ou
   - s'étendre sur 360 degrés, tout autour de l'axe X ; et/ou
   - recevoir des vis de fixation, boulons de fixation ou rivets de fixation ;
- Chaque lobe de fixation peut comprendre au moins un orifice traversant, par exemple recevant une série de vis, boulons ou rivets de fixation ;
- Le logement additionnel peut :
   - être réalisé depuis une fenêtre centrale de l'organe périphérique d'inertie, à l'intérieur duquel une partie de l'organe central est en appui ;
   - être une forme discontinue de matière, autrement dit exempté d'une continuité de matière, tout en conservant sa fonction de positionnement. Le logement peut alors comprendre : une portée de centrage cylindrique continue, et une surface d'appui axial discontinue. On réduit le besoin de matière pour le positionnement de l'organe central, en raison de la surface d'appui axial. L'encombrement et le poids sont limités pour le volant ;
   - formé des moyens de fixation, puisqu'on peut loger et maintenir fixe l'extrémité de l'organe adjacent;
- La surface d'appui axial discontinue du logement peut être formée par lesdits lobes de fixation. L'avantage des lobes est ici d'assurer une double fonction, celle de positionner correctement les deux organes avant de les assembler fixement l'un sur l'autre. Les pertes sont réduites. L'encombrement es aussi réduit ;
- Les organes central et périphérique d'inertie, et notamment les moyens de positionnement, peuvent être réalisés par forgeage, par exemple : par matriçage, estampage, ou moulage. Le matriçage ou l'estampage offre de meilleures caractéristiques mécaniques (homogénéité interne du matériau, fiabilité, aspect de surface) pour les organes. D'où un ratio "tenue mécanique / masse de la pièce" amélioré, et des coûts d'usinage réduits. L'organe central peut être réalisé en alliages d'aluminium, forgé par matriçage. Sa fabrication est simplifiée ;

L'invention a pour objet, selon un deuxième aspect, un module amortisseur de torsion pour un engin de mobilité, comprenant au moins un volant d'inertie dont un volant d'inertie assemblé selon l'une ou l'autre des caractéristiques précédentes, l'organe central dudit volant d'inertie assemblé étant lié solidairement en rotation à un vilebrequin, et l'organe périphérique d'inertie dudit volant d'inertie assemblé étant lié solidairement en rotation à un mécanisme d'embrayage ou à un système d'amortissement primaire.

Grâce à ces caractéristiques, on simplifie la fabrication d'un tel module amortisseur de torsion. Avec une inertie plus élevée et une masse plus faible du volant d'inertie assemblé, on réduit la masse globale dudit module toute en améliorant ses capacités de filtration. L'encombrement est limité au sein dudit module. Sa consommation énergétique est réduite. Ses performances sont améliorées. Dès lors, ses coûts de fabrication et de fonctionnement sont réduits.

Un tel module amortisseur de torsion, conforme au deuxième aspect de l'invention, peut présenter l'une ou l'autre des caractéristiques décrites ci-dessous combinées entre elles ou prises indépendamment les unes des autres :
- L'organe central peut être un élément d'entrée de couple dudit volant ;
- L'organe périphérique d'inertie peut être un élément de sortie de couple dudit volant ;
- Selon un mode de réalisation particulier, le module amortisseur de torsion peut être un double volant amortisseur ;
- Dès lors, le volant d'inertie assemblé peut être un volant d'inertie primaire du double volant amortisseur ;
- Selon un mode de réalisation particulier, le module amortisseur de torsion peut être un module d'embrayage ;
- Dès lors, le volant d'inertie assemblé peut être un volant simple, notamment un volant rigide, de préférence de type volant moteur. Par volant moteur, on entend un volant d'inertie connecté à un arbre menant, ici à une extrémité du vilebrequin. Il peut être exempté de ressorts, et notamment connecté directement à un mécanisme d'embrayage ;
- Dans le cas d'un volant d'inertie assemblé formant un volant rigide, l'organe périphérique d'inertie peut être fixé solidairement en rotation à un mécanisme d'embrayage.
- Dans le cas d'un volant d'inertie assemblé formant un volant d'inertie primaire, l'organe périphérique d'inertie peut être lié solidairement en rotation à un système d'amortissement primaire.
- Avantageusement, le système d'amortissement primaire peut comprendre :
   - un voile central, et/ou
   - ladite rondelle de couplage. Ladite rondelle de couplage peut frotter avec l'organe périphérique d'inertie, notamment au niveau de la zone de friction du volant d'inertie assemblé ; et/ou
   - un module pré-amortisseur, par exemple un sous-ensemble unitaire dit « cassette » ;
- Avantageusement, le mécanisme d'embrayage peut comprendre :
   - ledit plateau de pression et un couvercle d'embrayage, et/ou
   - au moins un diaphragme d'embrayage, et/ou
   - un ensemble multidisque d'embrayage, par exemple au moins un embrayage à friction.
- Le ou les embrayages peuvent être de type sec ou humide. On entend par embrayage humide, un embrayage adapté à fonctionner dans un bain d'huile ou brouillard d'huile.
- Le mécanisme d'embrayage peut être agencé pour sélectivement mettre en prise un disque d'embrayage entre un plateau de pression et le volant d'inertie assemblé, notamment l'organe périphérique d'inertie.
- Le mécanisme d'embrayage peut être fixé solidairement en rotation au niveau d'une interface de montage de l'organe périphérique d'inertie du volant d'inertie assemblé ;
- L'organe central peut être fixé solidairement au vilebrequin par rivetage ou vissage;
- L'organe périphérique d'inertie peut être fixé solidairement au mécanisme d'embrayage par rivetage ou vissage;

L'invention a pour objet, selon un troisième aspect, un procédé de fabrication d'un volant d'inertie assemblé, pouvant reprenant tout ou partie des caractéristiques mentionnées précédemment, comprenant les étapes suivantes :
a) Fournir :
   - un organe central, d'axe X de révolution, et
   - un organe périphérique d'inertie, ayant une masse volumique strictement supérieure à celle de l'organe central, chacun des organes central et périphérique d'inertie étant pourvu de moyens de positionnement ;
b) Mettre en appui axial de l'organe central sur l'organe périphérique d'inertie, de telle manière à disposer axialement en regard les moyens de positionnement des organes ;
c) Fixer solidairement les organes central et périphérique par des moyens de fixation, notamment au niveau desdits moyens de positionnement, au moins certains des moyens de fixation étant rapportés ou issus de matière avec l'un ou l'autre des organes.

On réalise, selon cet aspect de l'invention, en plusieurs organes un volant d'inertie assemblé. Les organes sont réalisés différemment, dans des masses volumiques distinctes, sans perte de matière ni usinage supplémentaires.

La fabrication est simplifiée. Les coûts sont réduits. L'organe central, ou en variante l'organe périphérique d'inertie, peut être standardisé. On peut alors standardiser et réutiliser : une même gamme d'outillage, notamment un même moule de fabrication, de mêmes étapes d'assemblage. Un remplacement ciblé d'un organe détérioré est possible. Le rébus est limité et évite de remplacer l'intégralité du volant d'inertie assemblé.

Selon l'étape b), on peut mettre en appui axial, dans une première position angulaire, l'organe central sur l'organe périphérique d'inertie ; Puis décaler angulairement, dans une deuxième position angulaire, l'organe central, de telle manière à mettre axialement en regard lesdits moyens de retenue. Ainsi on positionne axialement en regard les moyens de retenue de chacun desdits organes. Ce décalage axial permet d'aligner axialement les moyens de retenue, ceux de l'organe central coaxiaux à ceux dudit organe périphérique d'inertie.

Selon l'étape c), on peut réaliser au moins l'un des moyens de fixation de l'organe central, par un renflement obtenu par refoulement de matière de l'organe central en direction de la première surface d'appui axial correspondante.

L'invention a aussi pour objet, selon un quatrième aspect, un kit d'assemblage pour une transmission de véhicule, comprenant un volant d'inertie pouvant reprenant tout ou partie des caractéristiques mentionnées précédemment.

Selon cet aspect de l'invention, ledit volant d'inertie assemblé peut être un volant moteur ou un volant d'inertie primaire d'un double volant amortisseur

Selon cet aspect de l'invention, le kit d'assemblage peut comprendre en outre :
- un autre volant d'inertie, dit volant d'inertie secondaire, de préférence monobloc
- un mécanisme d'embrayage ; et/ou
- un arbre de transmission de couple, qui peut être un arbre menant couplé en rotation à un moteur ; et/ou
- un système d'amortissement primaire, comprenant par exemple une rondelle de couplage ; et/ou
- un vilebrequin,
- une butée de débrayage ;

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux figures annexées :
- [Fig. 1] est une coupe axiale d'un module amortisseur de torsion, comprenant en outre un volant d'inertie assemblé selon un premier mode de réalisation de l'invention ;
- [Fig. 2] est une vue détaillée du volant d'inertie assemblé selon le premier mode illustré à la [Fig. 1] ;
- [Fig. 3] est une autre vue détaillée du volant d'inertie assemblé selon le premier mode illustré à la [Fig. 1] ;
- [Fig. 4] est une perspective du volant d'inertie assemblé, selon le premier mode illustré à la [Fig. 1] ;
- [Fig. 5] est une perspective éclatée du volant d'inertie assemblé, selon le premier mode illustré à la [Fig. 1]
- [Fig. 6] est une perspective du volant d'inertie assemblé, selon un deuxième mode de réalisation de l'invention ;
- [Fig. 7] est une vue détaillée du volant d'inertie assemblé, selon un troisième mode de réalisation de l'invention ;
- [Fig. 8] est une coupe axiale d'un module amortisseur de torsion, de type double volant amortisseur, comprenant en outre un volant d'inertie assemblé selon un quatrième mode de réalisation de l'invention ;

Par « engin de mobilité », on entend les véhicules automobiles, comprenant les véhicules passagers, mais aussi les véhicules industriels, notamment les poids lourds, les véhicules de transport en commun ou les véhicules agricoles, ainsi que tout engin de transport permettant de faire passer d'un point à un autre un être vivant et/ou un objet. Ce dernier peut comporter une motorisation hybride, une motorisation électrique et/ou de petite mobilité.

Sauf indication contraire, « axialement » signifie « parallèlement à l'axe X de rotation du volant d'inertie assemblé ou du module amortisseur de torsion » ; « radialement » signifie « selon un axe transversal coupant l'axe de rotation du volant d'inertie assemblé ou du module amortisseur de torsion » ; « angulairement » ou « circonférentiellement » signifient « autour de l'axe X de rotation du volant d'inertie assemblé ou du module amortisseur de torsion ».

Dans la suite de la description et des revendications, on utilisera à titre non limitatif et afin d'en faciliter la compréhension, les termes "intérieur / interne" ou "extérieur / externe" par rapport à l'axe X et suivant une orientation radiale, orthogonale à ladite orientation axiale ; et les termes "arrière" AR et "avant" AV pour définir la position relative d'un élément par rapport à un autre selon la direction axiale, un élément destiné à être placé proche du moteur thermique étant désigné par arrière AR et un élément destiné à être placé proche de la boîte de vitesses étant désigné par avant AV. Les épaisseurs EP1, EP2, EP2' sont ici mesurées selon l'axe X de rotation.

Dans la description, on peut indexer certains éléments, comme par exemple, des premiers et deuxièmes moyens de retenue, des première et deuxième interfaces de montage, des premières et deuxièmes surfaces. Il s'agit d'un simple indexage pour différencier et nommer des éléments proches mais non identiques. Cette indexation n'implique pas une priorité d'un élément par rapport à un autre et on peut aisément inter-changer de telles dénominations sans sortir du cadre de la présente description. L'indexation n'implique pas non plus un ordre dans le temps.

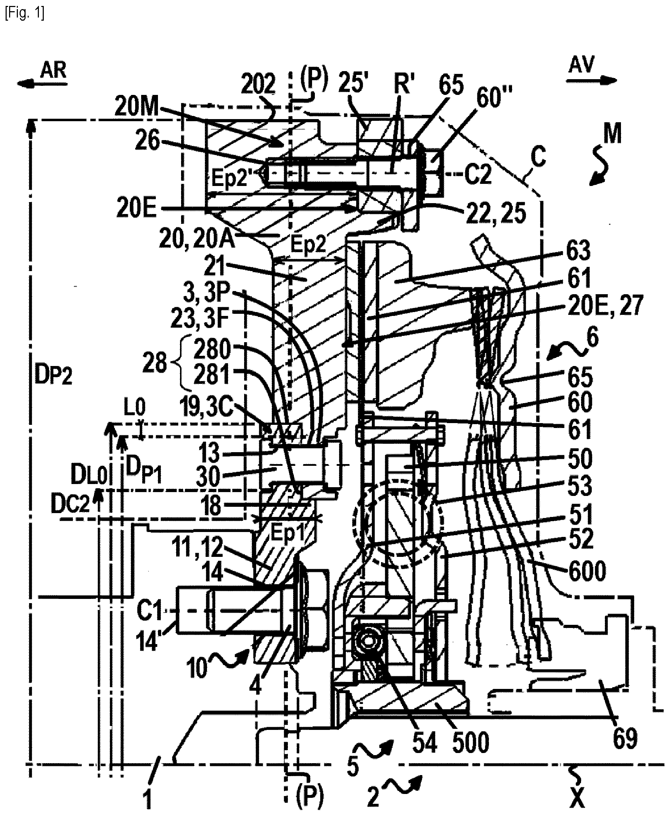

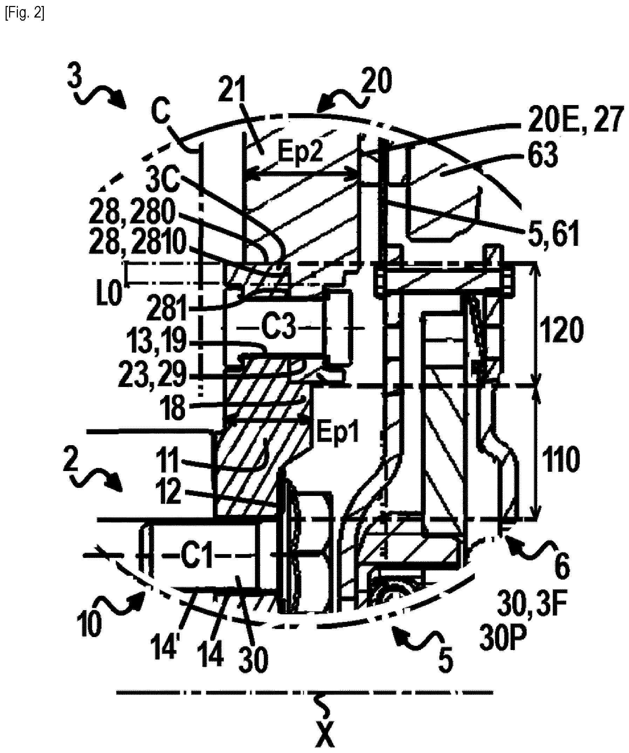

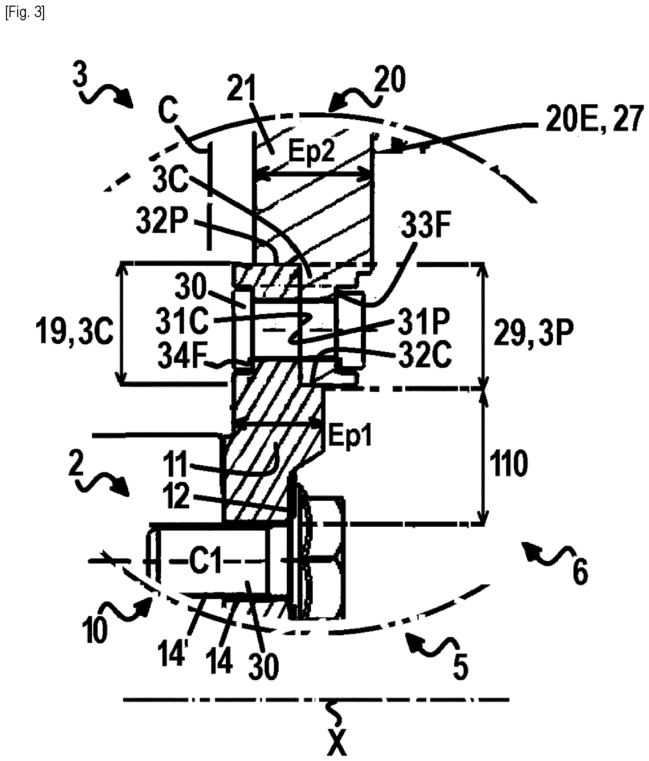

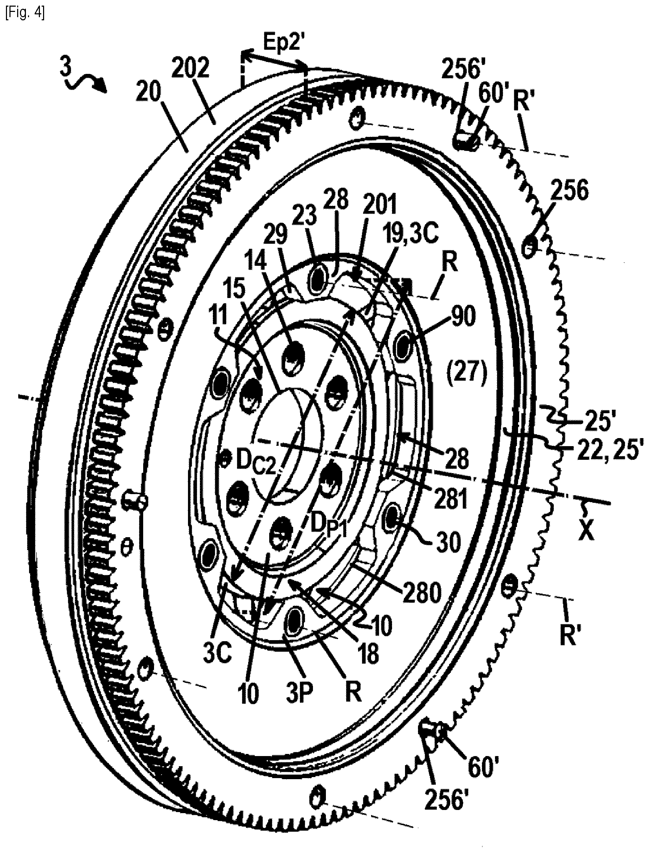

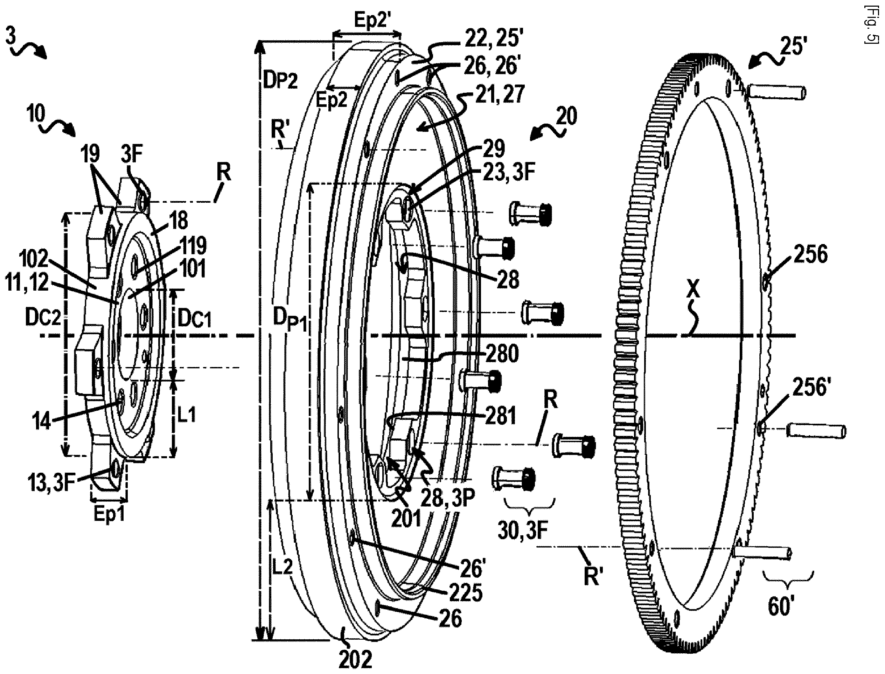

Les FIGURES 1 à 5 représentent un module amortisseur de torsion M, équipant un système de transmission de couple de la chaîne cinématique d'un véhicule à moteur, qui comprend en outre un volant d'inertie assemblé selon un premier mode de réalisation.

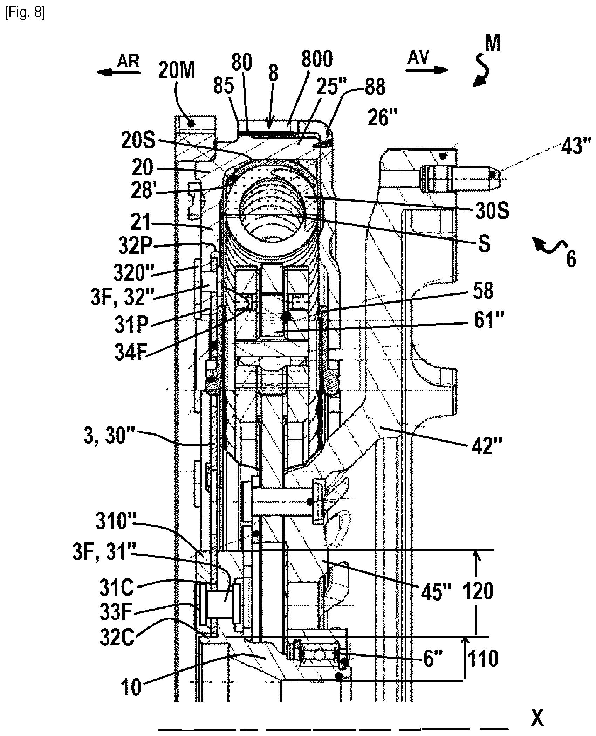

Dans l'exemple considéré, ce module amortisseur de torsion M, d'axe X de rotation, comprend en outre :
- un boitier ou carter de protection C à l'intérieur duquel est logé au moins en partie les composants dudit module ;
- un élément menant d'entrée de couple, ici articulé tel un vilebrequin 1 dit arbre sortie d'un moteur du véhicule automobile, fixé solidairement en rotation avec un volant d'inertie 3 (appelé aussi volant moteur);
- un module d'embrayage dit mécanisme d'embrayage 6 (non représenté en FIGURE 8), agencé pour sélectivement mettre en prise un disque d'embrayage 61, entre un plateau de pression 63 et le volant d'inertie 3. Pour cela, le mécanisme d'embrayage 6 est agencé pour déplacer un plateau de pression 63 relativement au disque d'embrayage 61. Le volant d'inertie 3 peut former le plateau de réaction d'un embrayage.
- un arbre mené 2, dit arbre de transmission de sortie de couple, qui est ici un arbre d'entrée de boîte de vitesses, entrainé en rotation par un moyeu de sortie 62 d'un disque d'embrayage 61 d'un mécanisme d'embrayage 6.

Un tel module amortisseur de torsion M, et notamment un tel mécanisme d'embrayage 6, comprend en outre:
- au moins deux rondelles de guidage 51, 52 et/ou de frottement,
- un voile d'amortisseur 50 intercalé axialement entre les deux rondelles de guidage 51, 52,
- des organe d'amortissement dit ressorts 53, disposés circonférentiellement entre les rondelles de guidage 51, 52 et le voile d'amortisseur 50, afin de transmettre le couple moteur depuis les garnitures jusqu'au moyeu de sortie 62,
- un amortisseur de torsion 5, pouvant comprendre un module préamortisseur 55, ayant par exemple :
   - des ressorts dits de faible charge 54 (de dimension plus faible que les ressorts 53 d'amortissement), et/ou
   - un sous-ensemble unitaire dit « cassette ». Le module préamortisseur 55 peut être monté sur un voile central, et fixé à l'intérieur dudit disque d'embrayage 5, et coopérant avec lesdites rondelles de guidage 51, 52.

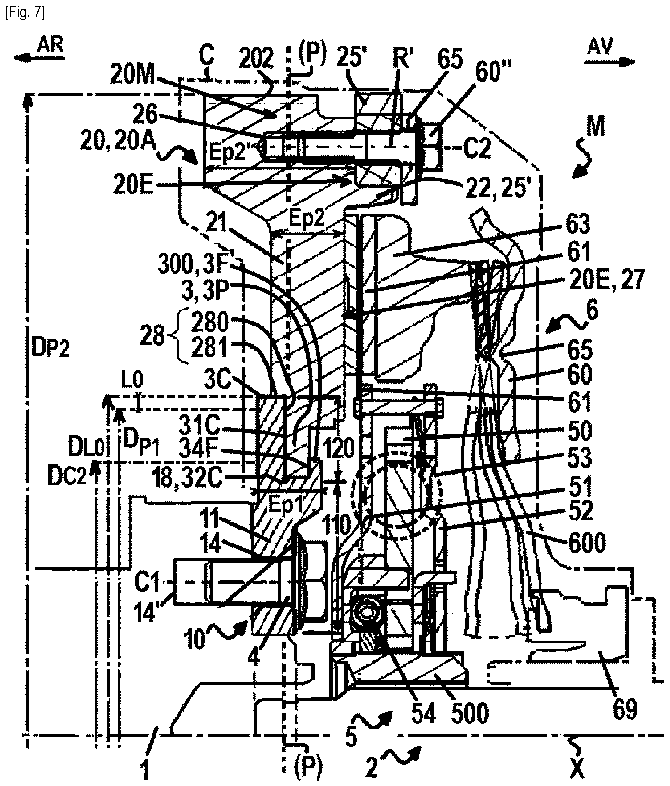

Par ailleurs, le mécanisme d'embrayage 6 comporte essentiellement :
- un couvercle 60 d'embrayage, qui est fixé solidairement au volant d'inertie 3 assemblé, et
- un diaphragme 600 d'embrayage, qui est logé dans le couvercle 60. Le diaphragme 600 est adapté à basculer, par exemple sous l'effet d'une butée centrale 69, entre une position embrayée et une position débrayée pour déplacer le plateau de pression 63 en translation par rapport au couvercle 60. Sur les FIGURES 1 et 7, le diaphragme 600 pivote autour d'une zone d'appui 65 située entre le diaphragme 600 et le couvercle 60.

En variante non illustrée, le diaphragme peut pivoter autour de première et seconde zones d'appui qui sont situées respectivement entre le diaphragme et le couvercle d'embrayage, et entre le diaphragme et le plateau de pression.

Dans un autre mode de réalisation non illustré, le mécanisme d'embrayage peut comporter en outre une rondelle support supportant au moins un pendule d'amortissement. Cette rondelle support est alors conformée pour que les pendules soient disposés axialement entre la rondelle de couplage et le mécanisme d'embrayage. Dès lors, les pendules peuvent alors être disposés axialement entre la rondelle de couplage et le diaphragme, notamment disposés axialement au niveau du plateau de pression. Les pendules peuvent être disposés axialement entre la surface du plateau de pression destinée à être en contact avec la rondelle de couplage et le diaphragme.

En fonctionnement, tel qu'illustré dans les exemples illustrés :
- En position embrayée, le disque d'embrayage 61 est en prise entre le plateau de pression 63 et le volant d'inertie 3. Ici, dans cette position embrayée, les garnitures de friction fixées sur le disque d'embrayage 61 frottent respectivement sur le plateau de pression 63 et le volant d'inertie 3, et l'entraînent ainsi en rotation ;
- En position débrayée, au contraire, la rondelle de couplage 61 n'est pas en prise, c'est-à-dire que la rotation du volant d'inertie 3 assemblé et du plateau de pression 63 n'est pas transmise au disque d'embrayage 61 ;
- Réciproquement, dans cette position débrayée, une rotation du disque d'embrayage 61 n'est pas transmise au volant d'inertie 3 assemblé ni au plateau de pression 63.

En outre, lors du fonctionnement,
- les forces produites par les combustions dans les cylindres du moteur sont ainsi transmises aux manetons du vilebrequin 1 (dit arbre menant) par l'intermédiaire des pistons et bielles, et génèrent un couple oscillant transmis par le volant d'inertie 3 au reste de la chaine cinématique. Les pics de couple instantané au niveau du vilebrequin peuvent être quatre fois supérieurs au couple moyen. Le vilebrequin est lié à une inertie importante en rotation qui résiste, et la contrainte maximale en torsion se situe alors dans cette extrémité du vilebrequin ;
- le volant d'inertie 3 doit aussi emmagasiner un excédent d'énergie sur la phase motrice (explosion), pour l'utiliser dans le franchissement du point mort (compression). Le phénomène est d'autant plus perceptible que le nombre de pistons est faible et que le régime moteur (rotation du moteur) est bas. D'où les diverses exigences du volant d'inertie.

Le volant d'inertie 3 est remarquable en ce qu'il est de composition multibloc, c'est-à-dire qu'il comprend des organes préassemblés, ici au nombre de deux, ayant chacun une symétrie de révolution selon l'axe X, parmi lesquels :
- un organe central 10 d'entrée de couple, disposé au plus près de l'axe X, qui définit la partie centrale du volant d'inertie. L'organe central 10 peut être un moyeu ou une rondelle centrale de guidage ; et
- un organe périphérique 20 d'inertie, ici de sortie de couple, disposé au plus loin de l'axe X, qui définit la partie radialement externe du volant d'inertie, et à l'intérieur duquel est logé l'organe central 10. De telle manière que, les organes central 10 et périphérique 20 d'inertie sont alignés radialement l'un par rapport à l'autre.

L'organe central 10 comprend au moins trois surfaces d'appui radialement externes configurées pour être en contact avec l'organe périphérique 20 d'inertie. L'organe périphérique 20 d'inertie comprend au moins trois surfaces d'appui radialement internes configurées pour être en contact l'organe central 10. En outre au moins 50% des surfaces radialement externes de l'organe central 10 est logé dans l'organe périphérique 20 d'inertie.

De préférence, ce moyeu de guidage est exempt de cannelure. En variante non illustrée, il peut être une rondelle centrale de guidage également apte à être montée sur l'arbre menant 1. De ce fait, l'organe périphérique d'inertie 20 est un élément de sortie de couple du volant d'inertie. Les organes 10, 20 sont liés solidairement ensemble en rotation, constituant un sous-ensemble unitaire préalablement assemblé, dit volant d'inertie 3 préalablement assemblé, qui simplifie les étapes de transport et de montage.

Les organes 10, 20 sont formés distinctement, en étant réalisés sous différentes formes annulaires ou tournantes discoïdales, pour satisfaire différentes fonctions. Pour ce faire, les organes 10, 20 peuvent être différents de part : la nature du matériau employé, par exemple : la masse volumique (densité), la rigidité, ou encore la forme finale de l'organe, notamment bien plus importante et allongée pour l'organe périphérique d'inertie 20.

Avantageusement, les organes 10, 20 sont configurés pour augmenter l'inertie résultante du volant assemblé 3, par exemple en étant réalisés dans des matériaux M1, M2 différents. On peut ainsi les différencier comme suivant :
- Le matériau M2 de l'organe 20 a une masse volumique deux fois supérieure ou égale que celle du matériau M1 de l'organe central 10, notamment 2,5 fois supérieure ou égale à celle du matériau M1 ;
- L'organe périphérique d'inertie 20 a une masse strictement supérieure à celle de l'organe central 10;
- L'organe périphérique d'inertie 20 a un volume strictement supérieur à celui de l'organe central 10;
- Le matériau M2 de l'organe 20 peut avoir une rigidité supérieure à celle du matériau M1 de l'organe central 10 ;
- Le matériau M1 de l'organe central 10 peut être plus flexible que la matériau M2 de l'organe périphérique d'inertie 20. D'où une flexion plus importante autour d'un axe perpendiculaire à l'axe X, qui se traduit par un mouvement de pompage, c'est-à-dire de déplacement dudit volant d'inertie 3 assemblé parallèlement à lui-même ;
- La rigidité en torsion de l'organe 10 peut être plus importante, l'accélération angulaire de l'extrémité du vilebrequin fixée peut alors être pratiquement identique à celle du volant d'inertie 3 assemblé.
- L'organe périphérique d'inertie 20 comprend une forme allongée, ayant notamment
   - une épaisseur Ep2, Ep2', qui est supérieure ou égale à l'épaisseur Ep1 de l'organe central 10; et/ou
   - une élongation radiale L2 qui est 1,5 fois supérieure ou égale à celle de l'organe central.
   Notamment l'élongation radiale L2 est comprise entre 2,5 et 3,5 fois l'élongation radiale L1 de l'organe central. A titre d'exemple, l'élongation radiale L2 est d'environ 1,8 fois l'élongation radiale L1

A titre d'exemple, l'organe central 10 d'entrainement s'étend selon une longueur dite élongation radiale L1, entre ses diamètres intérieur DC1 et extérieur DC2. L'élongation radiale L1 peut être définie depuis son alésage 15 jusqu'à son épaulement 16. L'interface de montage 12 peut être définit radialement sur 30% à 90% de l'élongation radiale L1.

Avantageusement, les organes 10, 20 présentent de différentes formes annulaires ou tournantes discoïdales, ayant chacune une âme centrale 11, 21. Les âmes 11, 21 sont coaxiales et logées l'une dans l'autre. Chaque âme centrale 11, 21 s'étend axialement entre deux flancs latéraux opposés, notamment situés sur l'arrière AR et l'avant AV.

Par âme 11, 21 centrale, on entend une base ou un socle principal constitutif de l'organe, d'orientation transversale. L'âme centrale 11 de l'organe 10 définit entre ses flancs une épaisseur Ep1. L'âme centrale 21 de l'organe périphérique d'inertie 20, définit entre ses flancs une épaisseur Ep2.

Avantageusement, l'organe périphérique 20 d'inertie comprend:
- une interface d'embrayage 20E qui coopère avec un mécanisme d'embrayage 6. L'interface d'embrayage 20E peut alors être pourvue d'une zone de friction 27 adaptée à coopérer avec un disque d'embrayage 61 ;
- une interface moteur de support 20M, qui reçoit en support une couronne de démarreur ou un anneau de synchronisation (non illustré). D'où une meilleur synchronisation et accélération du moteur avec le volant d'inertie; et
- une masse 20A formant l'inertie principale fonctionnelle dudit volant d'inertie 3 assemblé.

A titre d'exemple, un tel anneau de synchronisation est muni d'éléments de synchronisation agencées sur une périphérie extérieure de l'organe périphérique d'inertie. A titre d'exemple, une telle interface moteur peut alors être disposée radialement en regard d'un capteur (type PMH - Point Mort Haut) aussi appelé capteur vilebrequin, afin de délivrer un signal représentatif de la position angulaire et/ou de la vitesse de la cible 6, afin d'informer le calculateur du véhicule de la position du vilebrequin 1, pour que le calculateur puisse calculer le régime moteur et commander correctement l'injection du carburant et, pour les moteurs à essence, l'allumage des bougies.

Dans l'exemple considéré, l'interface moteur de support 20M peut comprendre un épaulement 25' ou couronne d'inertie, issu(e) de matière, qui définit une épaisseur Ep2' bien plus importante que l'épaisseur Ep2 de l'âme centrale 21. L'épaisseur Ep2' peut être égale jusqu'à 5 fois à l'épaisseur Ep1, et jusqu'à 3 fois l'épaisseur Ep2. L'organe périphérique 20 d'inertie peut être de forme modulable, notamment en fonction des besoins constructeurs, notamment en inertie. L'épaulement 25' est circonférentiellement continue sur 360 degrés, délimité par un contour 202 externe.

Par ailleurs, l'organe central 10 d'entrainement peut être au moins en partie standardisée, autrement dit, de forme inchangée et repliable quel que soit la forme finale exigée des volants d'inerties.

Pour tous les volants d'inertie 3 à assembler, on peut réutiliser cette même forme en production, par exemple avec un même moulage des organes centraux 10. Pour ce faire, l'organe central 10 comprend :
- une partie interne ajustable 110, qui est liée solidairement à l'extrémité du vilebrequin, et
- une partie externe standardisée 120, qui est liée solidairement à l'organe périphérique 20 d'inertie. Comme décrit précédemment, la partie externe standardisée 120 est de forme inchangée et repliable, plus simples et rapides à fabriquer, et ce en un temps réduit. Aucun changement d'outillage n'est nécessaire.

Avantageusement, l'organe central 10 est configuré pour être monté sur le vilebrequin, via une interface de montage 12 (dite première interface de montage). La partie interne ajustable 110 peut former l'interface de montage 12 de l'organe central 10, afin de recevoir l'extrémité du vilebrequin 1, à des fins de connexion sûre.

Pour ce faire, l'interface de montage 12 peut
- être issue de matière avec l'organe central 10;
- comprendre des ouvertures 14 traversant, à l'intérieur desquels est reçue une série de vis 4. Ces vis 4 débouchent notamment dans des orifices 14' borgnes de l'extrémité du vilebrequin 1.

Les ouvertures 14 et les orifices 14' sont coaxiaux, notamment de dimensions identiques, présentant une même aire. Les orifices 14' borgnes sont ici réalisés par perçage. L'organe central 10 est solidaire en rotation et entraine alors à son tour l'organe périphérique d'inertie 20. Dans un autre mode de réalisation non illustré, on peut ajouter une cale entre les têtes de vis 4 de vilebrequin et la partie radiale plane de l'âme centrale 11.

L'interface moteur de support 20M peut être disposée radialement à l'opposé de l'interface de montage 12.

Dans les exemples illustrés, l'interface de montage 12 est:
- formée sur l'âme centrale 11, ici une partie radiale plane, de préférence souple en flexion et en torsion ;
- délimité par un cercle C1 d'implantation des ouvertures 14 ou orifices 14', soit une zone circulaire et continue autour de l'axe X (appui primaire). Ainsi les ouvertures 14 et les vis 4 sont disposés le long du cercle C1 d'implantation ;

Par ailleurs, l'interface moteur de support 20M, et notamment l'épaulement 25', forme une interface de montage 22 de l'organe périphérique 20 d'inertie (dite deuxième interface de montage), sur laquelle est monté fixement en rotation le mécanisme d'embrayage 6, ici l'extrémité du couvercle 60. Les interfaces de montage 12, 22, formées distinctement sur l'un ou l'autre des organes 10, 20, sont localisées de part et d'autre du volant d'inertie assemblé.

Pour ce faire, l'interface de montage 25 est réalisée depuis le diamètre extérieur DP2, autrement dit ici sur la couronne d'inertie 25'. En outre, l'interface de montage 25 reçoit notamment :
- des moyens de fixation 60', 60" pour la couronne d'inertie 25, ici répartis en deux séries distinctes
- une couronne dentée 25' pour l'entraînement par le pignon d'un démarreur. La couronne dentée 25', de préférence en acier, est rapportée fixement sur la couronne d'inertie 25, notamment sur l'interface de montage 22 ;

Dans l'exemple considéré, l'organe central 10 d'entrainement comprend un alésage 15 de centrage.
- à l'intérieur duquel est logé l'organe central 10 et l'extrémité du vilebrequin 1,
- pouvant être défini le diamètre intérieur DC1 dudit organe central 10, et notamment l'interface de montage 12.

Dans les exemples illustrés, l'interface de montage 22 de l'organe périphérique d'inertie 20 peut être définie par
- une âme centrale 21 de l'organe 10 : ici une partie radiale plane, de préférence rigide ;
- un cercle C2 d'implantation des ouvertures 26', 26 qui définit une zone circulaire et continue autour de l'axe X (appui primaire). Ainsi les ouvertures 26', 26 sont disposés le long du cercle C2 d'implantation ;
- recevoir plusieurs pièces, dont une couronne dentée 25' et un couvercle 60 du mécanisme d'embrayage 6. La couronne dentée 25' est ici intercalée axialement entre la couronne d'inertie 25 et le couvercle 60 d'embrayage ;
- des ouvertures 26', 26, ici au nombre de dix, ici des perçages, de forme et dimensions identiques, présentant une même aire, dont au moins certains peuvent être formés par paires symétriquement par rapport à l'axe de chaque ouverture, pour le montage fixe respectivement de la couronne dentée 25' et du couvercle 60.

Dans le premier mode, les ouvertures 26', 26 sont des trous borgnes, non traversant. Les trous borgnes débouchent ici axialement, par exemple dans une cavité annulaire de l'interface de montage 22.

Ces ouvertures 26', 26 peuvent être réparties en deux séries distinctes, parmi lesquelles
- une série d'ouvertures 26' recevant des goupilles, vis ou rivets de fixation 60', ici au nombre de sept, pour monter la couronne dentée 25' sur l'interface de montage 22, et
- une série d'ouvertures 26 recevant des goupilles, vis ou rivets de fixation 60 ici au nombre de trois, pour monter le couvercle 60 sur l'interface de montage 22, ces derniers traversant la couronne dentée 25'.

Dans les exemples illustrés,
- le couvercle 60 comprend une partie externe pourvue orifices 670, coaxiaux aux ouvertures 26, d'axe R' ;
- la couronne dentée 25' comporte des orifices 256', 256 traversant, coaxiaux aux ouvertures 26', 26, d'axe R', formés notamment par paires symétriquement par rapport à l'axe de chaque orifice, de sorte à être répartis en deux séries distinctes 256', 256, respectivement pour le montage distinct des goupilles, vis ou rivets de fixation 60'et 60" ;

Dans un mode de réalisation non illustré, on peut ajouter une cale entre les têtes de vis et la partie radiale plane dudit couvercle d'embrayage. Dans une autre variante non illustrée, lesdits ouvertures de l'interface de montage peuvent être réalisées sur des rebords orientés vers l'axe X, faisant saillie en direction de la fenêtre centrale.

Par ailleurs, l'organe périphérique 20 d'inertie comprend une zone de friction 27 sur laquelle coopère le disque d'embrayage 61. De cette manière, le disque d'embrayage 61 est adapté à être en prise avec la zone de friction 27. Ainsi, le mécanisme d'embrayage 6 déplace axialement le plateau de pression 63 pour mettre en prise le disque d'embrayage 61 entre le plateau de pression 63 et la zone de friction 27 dudit organe périphérique 20. Cette zone de friction 27 est formé sur l'âme centrale 21, garantissant la fonction de transmission de couple. En outre, la zone de friction 27 est disposée radialement entre les deux interfaces de montage 12, 22.

Par ailleurs, l'organe périphérique d'inertie 20 comprend un épaulement 25, qui peut
- recevoir la couronne dentée 25', pour faciliter son montage et centrage ;
- être formé depuis le diamètre extérieur DP2, et s'étendre de manière continue, ici sur 360 degrés autour de l'axe X ;
- être formé par la couronne d'inertie 25' ;
- être réalisé par forgeage, ou par moulage et/ou usinage ;
- comprendre une nervure ou une rainure, annulaire, s'étendant depuis le diamètre extérieur DP2 ;
- définir moins en partie ladite interface de montage 22 ;
- entourer au moins en partie la rondelle de couplage et l'amortisseur de torsion 50. La couronne dentée 25' est alors écartée radialement du reste du module amortisseur de torsion, pour les protéger.

Par ailleurs, l'organe central 10 comprend un épaulement 25, qui peut
- recevoir l'organe périphérique 20 d'inertie, pour faciliter son montage et centrage ;
- être formé depuis le diamètre extérieur DC2, et s'étendre de manière continue, ici sur 360 degrés autour de l'axe X ;
- être réalisé par forgeage, ou par moulage et/ou usinage ;
- comprendre une nervure ou une rainure, annulaire, s'étendant depuis le diamètre extérieur DC2.

Avantageusement, les organes central 10 et périphérique d'inertie 20 sont configurés pour être assemblés préalablement ensemble. Ainsi, les organes central 10 et périphérique d'inertie 20 comprennent chacun
- des moyens de positionnement 3C, 3P coopérant conjointement, et
- des moyens de fixation 3F reliant les moyens de positionnement 3C, 3P entre eux,
afin de monter solidairement l'organe central 10 à l'intérieur de l'organe périphérique d'inertie 20.

Toute forme de moyens de retenue 3C, 3P est possible, afin d'optimiser la fixation, la disposition et/ou la formation des organes (solution compacte et/ou faible quantité de matière). Dès lors, les organes 10, 20 peuvent :
- transmettre le couple depuis l'extrémité du vilebrequin 1 jusqu'au mécanisme d'embrayage, en étant fixés solidairement ensemble, notamment grâce à des moyens de positionnement 3C, 3P et de fixation 3F,
- réguler et stabiliser la rotation du moteur, pour réduire les à-coups provoqués par les cylindres.

Avantageusement, l'organe périphérique d'inertie 20 est configuré pour loger l'organe central 10. Pour ce faire, l'organe périphérique d'inertie 20 comprend :
- un volume interne dit fenêtre centrale 201, à l'intérieur de laquelle est logé au moins en partie l'organe central 10 d'entrainement. On limite l'encombrement, les organes sont contenus dans un même plan P du volant d'inertie;
- un logement 28 additionnel, interne, à l'intérieur duquel est (sont) positionné(s) l'organe central 10, et notamment ses moyens de positionnement 3C.

La fenêtre centrale 201 peut être standardisée, selon n'importe quelle forme dudit organe central 10. A titre d'exemple, la fenêtre centrale 201 présente un contour fermé
- ici circulaire de centre l'axe X, ou en variante non illustrée, de forme sinusoïdale. On entend par « forme sinusoïdale » un contour délimitant une pluralité de vagues d'amplitude similaire ;
- dimensionnée selon le diamètre extérieur DC2 de l'organe central 10. Le diamètre extérieur DC2 peut être inférieur ou égale au diamètre intérieur DP1 de l'organe périphérique d'inertie 20, pour un assemblage compact.

Au moins certains des moyens de positionnement 3C de l'organe central 10 présentent :
- une première surface d'appui axial 31C, et
- une surface cylindrique 32C qui est axialement bordée par
   d'une part, la première surface d'appui axial 31C, et
   d'autre part une seconde surface d'appui 33F réalisé notamment par au moins un moyen de fixation 3F.

En outre, au moins certains des premiers moyens de positionnement 3C sont réalisés
- sur le diamètre extérieur DC2, autrement dit depuis l'âme centrale 11 de l'organe central 10 ;
- depuis une paroi annulaire 281 de l'organe central 10 ;
- de manière équidistante ou angulairement régulière autour de l'axe X ;
- par des lobes 19 de fixation, ici au nombre de six, par exemple de dimensions identiques. On entend par lobe de fixation, un rebord de forme arrondie, renfoncé, ayant une quantité réduite de matière ; et/ou
- par un rebord 18 annulaire sur lequel sont reçus les deuxièmes moyens de positionnement 3P ;

Au moins certains des moyens de positionnement 3P de l'organe périphérique 20 d'inertie présentent :
- une première surface d'appui axial 31P, et
- une surface cylindrique 32P qui est axialement bordée par
   d'une part, la première surface d'appui axial 31P, et
   d'autre part une seconde surface d'appui 34F réalisé notamment par au moins un moyen de fixation 3F.

En outre, au moins certains des deuxièmes moyens de positionnement 3P sont
- réalisés sur le diamètre intérieur DP1 de l'organe périphérique d'inertie 20, ici depuis sa fenêtre centrale 201 ;
- répartis de manière équidistante ou angulairement régulière autour de l'axe X ;
- formés par des lobes 29 de fixation, ici au nombre de six, par exemple de dimensions identiques.

La première surface d'appui axial 31C et la surface cylindrique 32C reçoivent les moyens de positionnement 3P de l'organe périphérique 20, notamment les lobes 19 de fixation.

La première surface d'appui axial 31P et la surface cylindrique 32P reçoivent les moyens de positionnement 3C de l'organe central 10, notamment les lobes 19 de fixation.

A titre d'exemple, le rebord 18 s'étend de manière continue, ici sur 360 degrés autour de l'axe X. L'épaulement est formé sur l'âme centrale 11, sous forme de nervure ou de rainure, s'étendant depuis le diamètre extérieur DC2.

En particulier, les lobes 19 forment la partie externe standardisée 120 de l'organe central 10.

A titre d'exemple, chaque lobe 19, 29 est:
- axialement étendu entre deux flancs latéraux opposés, dont l'un d'eux forme au moins en partie une surface d'appui;
- pourvu d'au moins un orifice 13 d'axe R, traversant axialement de part et d'autre les flancs latéraux opposés ;
- en sailli radialement vers l'extérieur, notamment en butée ou en appui axial sur des lobes de l'autre organe.

Selon le premier mode, les premiers moyens de fixation 3F sont démontable, étant notamment formés
- par une série de rivets 30, ici au nombre d'au moins six rivets 30 ; ou
- en variante non illustrée, par des excroissances, par exemple des ergots, des tétons ou des rivets extrudés.

Un rivet 30 est formé d'une seule pièce comportant une tête prolongée par une tige sensiblement cylindrique qui vient se loger dans les orifices 10 du plateau ménagé à cet effet. La tête a un profil ici cylindrique dont le diamètre est supérieur au diamètre intérieur des orifices 13 et 23 et la hauteur est faible (quelques mm). Un rivet 30 est formé par écrasement de la tige pour le bloquer axialement dans les orifices 13, 23.

Dès lors, les têtes des rivets 30 (ici du côté avant AV) forment ensemble la seconde surface d'appui 33F.

Dès lors, les autres têtes des rivets 30 (ici du côté arrière AR) forment ensemble la seconde surface d'appui 34F.

A titre d'exemple, au moins l'un des rivets peut avoir des masses différentes. Au moins l'un des rivets peut être de hauteur et/ou de diamètre différent, au niveau de sa tige ou de sa tête, afin notamment de compenser le balourd résultant d'un décentrage d'organe 10, 20 dû à différents jeux entre ce dernier et les rivets. En variante non illustrée, un lobe de liaison (de plus grande dimension) peut comprendre au moins deux trous de fixation (c'est-à-dire apte à recevoir deux rivets au lieu d'un seul).

A titre d'exemple, les moyens de positionnement 3C, 3P sont ainsi coaxiaux, d'axe R, disposés axialement en regard les uns des autres. Notamment les moyens de positionnement 3C, 3P peuvent être définis par un cercle d'implantation C3 des orifices 13, 23 dont ils sont pourvus. Ce cercle d'implantation C3 définit une zone de mise en appui axial desdits organes 10, 20, qui est de type circulaire et continue autour de l'axe X.

A titre d'exemple, les premiers et deuxièmes moyens de positionnement 3C, 3P se chevauchent les uns sur les autres. Les moyens de positionnement 3C sont formés radialement dans le prolongement de la zone de friction 27.

A titre d'exemple, un tel logement 28 peut être
- formé depuis la fenêtre centrale 201 ;
- unique, s'étendant autour de l'axe X de manière continue, ici sur 360 degrés ;
- ouvert radialement sur l'intérieur, de telle sorte à recevoir et centrer en partie l'organe central 10 d'entrainement, et plus précisément ses moyens de positionnement 3C.

A titre d'exemple, le logement 28 additionnel
- forme en partie les deuxièmes moyens de positionnement 3C ;
- est délimité en particulier par :
   - une portée de centrage 280, interne et continue autour de l'axe X, de préférence cylindrique, et
   - au moins une surface d'appui axial 281 de forme discontinue autour de l'axe X, qui comprend en outre :
      - une paroi annulaire 2810, d'extension radiale L0, de préférence moulée et/ou continue autour de l'axe X, et
      - une série de portions d'appui internes autour de l'axe X. De préférence ces portions d'appui sont moulées.

Dans le premier mode, la série de portions d'appui est formée par l'extrémité des moyens de positionnement 3P de l'organe périphérique, ici d'une des faces latérales des lobes de fixation 29. Ces portions d'appui sont espacées et réparties autour de l'axe X, constituant ensemble ladite discontinuité de la surface d'appui axial 281 discontinue.

En d'autres termes, la surface d'appui axial 281 discontinue dudit logement peut se définir comme toute portion de l'organe périphérique 20 destinée à venir axialement en appui contre l'organe central 10.

A titre d'exemple, la portée de centrage 280 définit le fond du logement 28, et notamment le diamètre intérieur DL0 du logement 28. Ce fond est de forme plan, pour centrer la périphérie radialement externe de l'organe central 10 d'entrainement, et notamment de ses moyens de positionnement 3P. Par ailleurs, la paroi annulaire 2810 est définie radialement entre le diamètre intérieur DP1 et la portée de centrage 280 ; définit à sa périphérie radialement interne un diamètre intérieur D_{L1} du logement 28.

A titre d'exemple, les organes central et périphérique 10, 20 forment respectivement la pièce mâle et la pièce femelle coopérant conjointement l'un dans l'autre. L'organe périphérique 20 d'inertie et notamment son élongation radiale L2, sont mis à profit pour diverse fonctions, notamment au moins l'une parmi celles de la liste suivante :
- transmettre le couple depuis l'organe central 10 à destination du mécanisme d'embrayage 6 ;
- réduire l'encombrement au sein du module amortisseur de torsion M, et notamment loger le mécanisme d'embrayage 6 ;
- accueillir à sa périphérie la couronne d'un démarreur et entraînement du moteur lors du démarrage ; et/ou
- disposé en regard d'un capteur (non illustré) pour connaître la position des pistons, et le cycle de combustion ;

On va maintenant décrire le procédé de fabrication du volant d'inertie 3 assemblé, tel qu'illustré par exemple dans le premier mode de réalisation. Cet assemblage comporte entre autre, les étapes suivantes :
- Selon une première étape a), on fournit
- un organe central 10, d'axe X de révolution, et
- un organe périphérique 20 d'inertie, de matériau différent de celui de l'organe central,
chacun des organes central 10 et périphérique 20 d'inertie étant pourvu de moyens de positionnement (3C, 3P) ;
En particulier, l'organe périphérique 20 d'inertie a une masse volumique strictement supérieure à celle l'organe central. On peut fournir en outre une couronne dentée 25' destinée à être assembler sur l'organe périphérique 20.
- Selon une deuxième étape b), on met en appui axial l'organe central 10 d'entrainement sur l'organe périphérique 20 d'inertie. Selon cette étape, on peut
   - insérer l'organe central 10 dans l'organe périphérique 20, notamment en le logeant à l'intérieur de la fenêtre centrale 201. Cet appui axial définit alors sa première position angulaire.
   - améliorer cette mise en appui axial, grâce à une coopération de formes entre organes 10, 20, par exemple avec les moyens de positionnement 3C, 3P, le rebord 18 et/ou le logement 28 (précédemment définis).
   - décaler angulairement, selon l'axe X, l'organe central 10 par rapport à l'organe périphérique 20, jusqu'à une deuxième position angulaire. Se faisant, on met axialement en regard leurs moyens de positionnement 3C, 3P. On les aligne axialement en décalant angulairement l'organe central 10. Les orifices 13, 23 sont coaxiaux d'axes R.
- Selon une troisième étape c), on fixe solidairement ensemble les moyens de positionnement 3C, 3P, par des moyens de fixation 3F rapportés, ici par insertion d'une série de rivets ou de vis 4. Les rivets ou de vis 4 sont insérés axialement au travers des orifices 13 et 23 coaxiaux. Le démontage du tel volant d'inertie 3 est donc possible de manière simple, en retirant les série de rivets ou de vis 4, puis ledit organe défectueux.

Des étapes additionnelles permettent d'assembler la couronne dentée 25' sur l'organe périphérique 20 :
- On peut mettre en appui axial la couronne dentée 25" sur l'organe périphérique 20, en particulier au niveau de l'interface de montage 22. Cet appui axial définit alors sa première position angulaire. Avantageusement, cette mise en appui axial est améliorée grâce à une coopération de formes entre organes 10, 20, par exemple avec la couronne d'inertie 25', et/ou l'épaulement 25 et/ou la cavité (précédemment définis).
- On peut décaler angulairement la couronne dentée 25" par rapport à l'organe périphérique 20, pour mettre en regard axialement les orifices 256' aux ouvertures 26'. Leurs orifices 256' et ouvertures 26' sont coaxiaux d'axes R'. Se faisant, on décale angulairement la couronne dentée 25" jusqu'à une deuxième position angulaire.
- On peut fixer solidairement l'organe périphérique 20 et la couronne dentée 25" ensemble,
   par insertion d'une série de moyens de fixation 60', ici des goupilles, axialement au travers des orifices 256' aux ouvertures 26'. Ce démontage est possible de manière simple, en retirant les série de moyens de fixation 60', puis ladite couronne dentée 25" défectueuse.

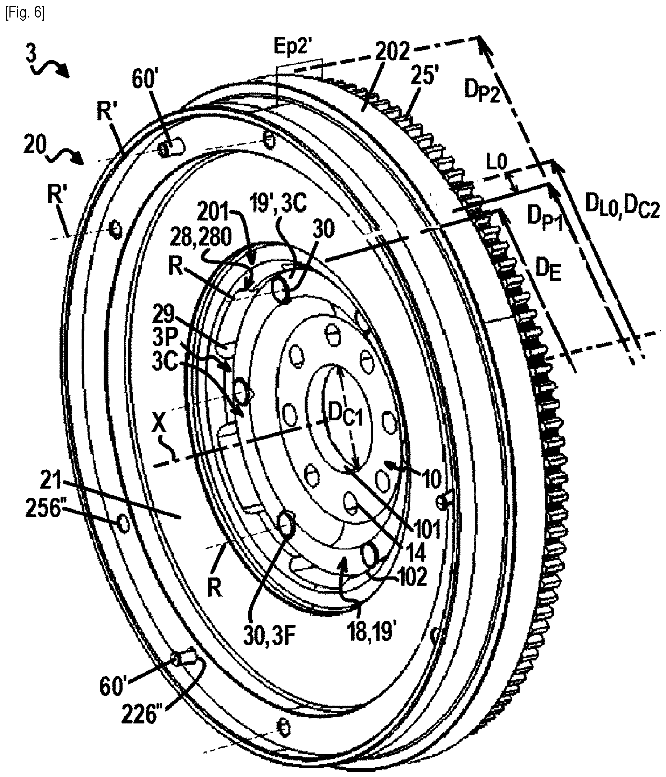

On a décrit sur la FIGURE 6, un deuxième mode de réalisation de l'invention sensiblement similaire au premier mode de réalisation, à l'exception du fait que :
- Les premiers moyens de positionnement 3C sont formés par une couronne 19' de centrage. La couronne 19' de centrage est pourvue d'orifices 13 traversant, les orifices 13 formant les premiers moyens de fixation 3C ;
- La couronne 19' est formée depuis l'âme centrale 11, ici sur le diamètre extérieur DC2 de l'organe central 10 ;
- Les orifices traversant 13 sont disposés axialement en regard des deuxièmes moyens de positionnement 3P, pour recevoir par exemple des vis, boulons ou des rivets 30 de fixation ;

Selon ce mode de réalisation, cette couronne 19' de centrage est ici reçue à l'intérieur dudit logement 28 de l'organe périphérique 20 d'inertie. De ce fait, le diamètre extérieur DC2 de l'organe central 10 d'entrainement est ici strictement supérieur au diamètre intérieur DP1 de l'organe périphérique 20 d'inertie. L'assemblage est compact.

Selon ce mode de réalisation, la couronne 19' de centrage est de forme annulaire, et elle a une épaisseur relativement importante que la partie radialement interne de l'âme centrale 11. L'âme centrale 11 a une épaisseur relativement importante sur sa partie radialement extérieure, ici sa couronne d'inertie 25'.

On a décrit sur la FIGURE 7, un troisième mode de réalisation de l'invention sensiblement similaire au premier mode de réalisation, à l'exception du fait qu'au moins l'un des moyens de fixation 3F' de l'organe central 10, est un renflement obtenu par refoulement de matière 300 de l'organe central 10 en direction de la première surface d'appui axial 34F correspondante. On entend par refoulement local un refoulement réalisé sur un secteur angulaire limité autour de l'axe de rotation X, notamment inférieur à 30 degrés, par exemple 20 degrés.

En d'autres termes, le procédé de fabrication d'un tel volant d'inertie 3 assemblé, est similaire à celui du premier mode, à l'exception du fait que, selon l'étape c), on fixer solidairement les organes central 10 et périphérique 20 par des moyens de fixation 3F', notamment au niveau desdits moyens de positionnement 3C, 3P, au moins certains des moyens de fixation étant issus de matière avec l'organe central 10, ici le renflement ou refoulement de matière 300.

L'organe central 10 comporte une zone à déformer délimitée axialement par, d'une part, une surface de frappe et d'autre part, la surface cylindrique, l'étape de formation du renflement étant réalisée en frappant la surface de frappe au moyen d'un outil tel qu'un poinçon en direction de la gorge.

Sur la FIGURE 7, la surface de frappe est agencée, après l'étape de déformation, au voisinage de la surface cylindrique, notamment à une distance axiale pouvant être comprise entre 1 et 5 mm.

On a décrit sur la FIGURE 8, un quatrième mode de réalisation de l'invention sensiblement similaire au premier mode de réalisation, à l'exception du fait que le module amortisseur de torsion M est un double volant amortisseur.

De préférence, le double volant amortisseur comprend en outre:
- un volant d'inertie primaire, formé du volant d'inertie 3 assemblé, qui est destiné à être fixé sur le vilebrequin 1,
- un volant d'inertie secondaire 4", qui est centré et guidé sur le volant d'inertie 3 primaire au moyen d'un organe de roulement dit roulement 6", tel qu'un palier de centrage pour le volant secondaire 3, et
- un système d'amortissement primaire S comprenant au moins :
   - une série d'organes élastiques 30S permettant de transmettre le couple et amortir les acyclismes de rotation entre les volants d'inertie primaire et secondaire, pour réduire les vibrations provenant du moteur de l'engin de mobilité ;
   - un système pendulaire ou un limiteur de couple 5', comprenant par exemple
   un organe d'entrée 5A, formé d'un voile 61" ou rondelle d'entrainement coopérant avec les organes élastiques 30S et un organe de sortie 5B multibloc, coopérant avec l'organe d'entrée 5A et fixé solidairement au volant secondaire.

En outre, le volant d'inertie 3 assemblé comporte:
- l'organe central 10 formant un moyeu central primaire, radialement interne, qui porte en outre le roulement 6 avec le volant secondaire 4",
- l'organe périphérique 20 d'inertie, qui comporte en outre : une âme central 21 sous forme de portion annulaire, s'étendant radialement, et une portion cylindrique 25" dit jupe cylindrique qui s'étend axialement, du côté opposé au vilebrequin du moteur, depuis la périphérie externe de l'âme central 21.

Les organes central 10 et périphérique 20 d'inertie sont liés solidairement ensemble par une rondelle de liaison 30", de préférence en acier, qui forme au moins certains des moyens de positionnement 3C, 3P desdits organes. Dès lors, un tel volant d'inertie 3 assemblé est de type flexible.

La rondelle de liaison 30" est lié d'un bout à l'autre par des moyens de fixation 3F, parmi lesquels :
- une première série 31" de rivets ou vis formant au moins en partie les moyens de fixation 3F de l'organe central 10 ;
- une deuxième série 32" de rivets ou vis formant au moins en partie les moyens de fixation 3F de l'organe périphérique 20 d'inertie.

Par ailleurs, au moins certains des moyens de positionnement 3C de l'organe central 10 présentent :
- une première surface d'appui axial 31C,
- une surface cylindrique 32C, qui est axialement bordée par, d'une part la première surface d'appui axial 31C, et d'autre part une seconde surface d'appui 33F d'un moyen de fixation 3F, ici de la première série 31" de rivets ou vis.

Par ailleurs, au moins certains des moyens de positionnement 3P de l'organe périphérique 20 présentent :
- une première surface d'appui axial 31P,
- une surface cylindrique 32P qui est axialement bordée par, d'une part la première surface d'appui axial 31P, et d'autre part une seconde surface d'appui 34F d'un moyen de fixation 3F, ici de la deuxième série 32" de rivets ou vis.

En outre, certains des moyens de fixation 3F de chaque organe peut être un élément de calage 310", 320" permettant de fixer axialement la rondelle de liaison 30" respectivement sur l'organe central 10 et l'organe périphérique 20.

En outre, le volant d'inertie 3 assemblé comporte un couvercle 26" annulaire fixé sur la portion cylindrique 25". Le couvercle 26" annulaire définit avec la portion annulaire et la portion cylindrique 25", une chambre 28" annulaire. Le couvercle 26" est fixé solidairement à la portion cylindrique 25", notamment par soudure 100.

En outre, le volant d'inertie 3 porte, sur sa périphérie extérieure, une interface moteur de support 20M présentant une couronne dentée pour l'entraînement en rotation du volant d'inertie 3, à l'aide d'un démarreur.

En fonctionnement du système d'amortissement primaire S, les organes élastiques 30S sont pressés vers l'extérieur contre la portion cylindrique 25" par la force centrifuge agissant sur eux. Dès lors, des organes de guidage, sous forme de goulottes, sont montées dans la chambre annulaire 28", entre la portion cylindrique 25"du volant d'inertie 3 et la périphérie externe des organes élastiques 30S. Les goulottes sont formées d'une tôle cintrée longitudinalement et transversalement. Les organes élastiques 30S sont, par exemple, des ressorts hélicoïdaux courbes qui sont circonférentiellement répartis autour de l'axe X. Chacun des organes élastiques 30S s'étend circonférentiellement entre deux pattes d'appui d'un voile 61" solidaire en rotation du volant d'inertie secondaire 4 et deux sièges d'appui portés par l'organe périphérique 20 d'inertie. Chaque siège d'appui porté par l'organe périphérique 20 d'inertie, est, par exemple, constitué par deux bossages, non illustrés qui sont respectivement formés dans la portion annulaire de l'organe périphérique 20 et dans le couvercle 26".

Ainsi, en fonctionnement, chacun des organes élastiques 30S prend appui, à une première extrémité, contre un siège d'appui porté par l'organe périphérique 20 d'inertie et, à une seconde extrémité, contre une patte d'appui portée par le voile 61", de sorte à assurer la transmission du couple entre les volant d'inertie primaire et secondaire.

Pour limiter le frottement entre les organes élastiques 30S et la portion cylindrique 23 du volant d'inertie 3, la chambre annulaire 28" est remplie d'un agent lubrifiant, de préférence de la graisse ou de l'huile. En outre, pour éviter les fuites de lubrifiant vers l'extérieur de la chambre annulaire 28", le limiteur de couple 5' comprend en outre au moins une rondelle 58 assurant l'étanchéité des volants primaire et secondaires.

Par ailleurs, le volant d'inertie secondaire 4 comporte:
- une portion annulaire 42" dit masse secondaire, s'étendant radialement et
- une portion cylindrique dit bord externe 43" s'étendant axialement, du côté opposé au moteur, depuis la périphérie externe de la portion annulaire 42" ;
- un moyeu 45" ou bride secondaire, radialement interne, centrant le roulement 6", présentant des cannelures internes destinées à coopérer avec des cannelures complémentaires d'un dispositif de transmission de couple, tel qu'un double embrayage ou un convertisseur de couple par exemple.

Le double volant amortisseur peut aussi comprendre un mécanisme d'embrayage 6 comme décrit précédemment. Dès lors, le volant secondaire 4 peut former le plateau de réaction d'un embrayage. Pour ce faire, le volant secondaire 4 présente une surface annulaire plane, tournée vers l'avant AV et destinée à former une surface d'appui pour une garniture de friction d'un disque d'embrayage.

Dans un mode de réalisation non illustré, le double volant amortisseur peut comprendre un module d'embrayage, par exemple un simple, double ou triple embrayage, de préférence de type humide, connecté au volant secondaire 4.

Enfin, le volant d'inertie 3 assemblé comprend une cible 8. Cette cible 8 comporte en outre :
- une couronne annulaire 80 qui s'étend axialement depuis la périphérie externe du flasque 5 et optionnellement
- un flasque 88, d'orientation radiale, destiné à être fixé contre la portion annulaire de l'organe périphérique 20 ;

La couronne annulaire 80 comporte une pluralité de fenêtres 800 qui sont séparées les unes des autres par des doigts 85 s'étendant dans la direction axiale, parallèlement à l'axe X. Une telle structure formée d'une alternance de doigts 85 et de fenêtres 800 permet à un capteur qui est fixé sur un élément non tournant du véhicule, comme par exemple le bloc moteur ou le carter de la boîte de vitesses du véhicule, et est positionné radialement en regard de la couronne annulaire 80 de détecter la position et/ou la vitesse de la cible 4.

La longueur axiale des fenêtres 800 définit la largeur d'une zone de lecture pour le capteur. Pour ce faire, dans un mode de réalisation avantageux, la cible 8 est réalisée dans un matériau magnétique. La cible 8 est par exemple réalisée en tôle métallique.

Selon une variante avantageuse, la cible 8 est réalisée dans une tôle d'emboutissage en acier, tel que de l'acier DD13 par exemple. En outre, le capteur est apte à détecter des variations de champs magnétiques. Un tel capteur est par exemple un capteur actif à effet hall ou un capteur passif. Ainsi, l'alternance de doigts 8 et de fenêtres 7, 19 de la couronne annulaire 6 est apte à générer, lorsque la cible 8 est entraînée en rotation, une variation de champ magnétique qui est détectée par le capteur. Dans un autre mode de réalisation, le capteur est un capteur optique qui détecte le passage d'une fenêtre 7, 19 ou d'un doigt 8 dans son champ optique.

D'autres moyens de coopération de forme, tels des accroches peuvent être possibles pour former les moyens de positionnement des organes. Par exemple, une combinaison de bras de liaison, de crochets, d'encoches, de perçages, d'évidemment de matière, ou encore tout type de coopération entre pièces mâle et femelle.

Dans un autre mode de réalisation non illustré, au moins certains des moyens de positionnement des organes peuvent être des ergots de pré-centrage. Les moyens de retenue peuvent aussi être montés par ajustement serré, c'est-à-dire avec un ajustement précis, par exemple sans jeu radial. Par exemple, par imbrication desdits organes.

Dans un autre mode de réalisation non illustré, au moins certains des moyens de retenue peuvent être de forme cannelée ou filetée, pour faciliter leur emboitement et une meilleure indexation, lors du montage serré des organes.

Dans un autre mode de réalisation non illustré, au moins certains des moyens de retenue peuvent être un ou des soudures, de tout type connues, par exemple par points, avec apport de matière, ou par laser, ou par résistance, ou par friction, ou par décharge de condensateur.

L'usage du verbe « comporter », « comprendre » ou « inclure » et de ses formes conjuguées n'exclut pas la présence d'autres éléments ou d'autres étapes que ceux énoncés dans une revendication. Dans les revendications, tout signe de référence entre parenthèses ne saurait être interprété comme une limitation de revendication.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. Les dimensions indiquées ou illustrées peuvent ne pas être à l'échelle et ne correspondent qu'à un modèle de volant d'inertie assemblé particulier développé par la demanderesse. On adaptera autant que de besoin le procédé de fabrication selon l'invention à d'autres diamètres nominaux du volant d'inertie assemblé et à d'autres épaisseurs ou longueurs de ses organes.

## Revendications

1. Volant d'inertie (3) assemblé pour un module amortisseur de torsion, comprenant:
- un organe central (10) d'entrée de couple, d'axe (X), destiné à être connecté à un vilebrequin (1), et
- un organe périphérique (20) d'inertie, de forme annulaire, à l'intérieur duquel est logé l'organe central (10), de telle manière que l'organe central (10) et l'organe périphérique (20) d'inertie soient alignés radialement entre eux,
les organes central (10) et périphérique (20) d'inertie étant réalisés dans des matériaux (M1, M2) différents et rapportés solidairement ensemble, à la fois de manière à réduire la masse et à augmenter l'inertie résultantes du volant d'inertie.

2. Volant d'inertie (3) assemblé selon la revendication 1, dans lequel l'organe central (10) comprend
- une partie interne ajustable (110), adaptée à être lier solidairement à l'extrémité du vilebrequin, et
- une partie externe standardisée (120), adaptée à être lier solidairement à l'organe périphérique (20) d'inertie, l'organe central (10) étant notamment réalisé sous la forme d'un moyeu ou d'une rondelle de guidage.

3. Volant d'inertie (3) assemblé selon la revendication 1 ou 2, dans lequel l'organe périphérique (20) d'inertie comprend:
- une interface moteur de support (20M), adapté à recevoir une couronne de démarreur ou un anneau de synchronisation, et
- une masse (20A) formant l'inertie principale fonctionnelle dudit volant d'inertie (3) assemblé,

4. Volant d'inertie (3) assemblé selon l'une quelconque des revendications précédentes, dans lequel
le volant d'inertie (3) assemblé est un volant d'inertie primaire d'un double volant amortisseur, et comprend en outre une interface d'amortissement (20S) adapté à recevoir un système d'amortissement primaire, ou
le volant d'inertie (3) assemblé est rigide et comprend en outre une interface d'embrayage (20E) adaptée à coopérer avec un mécanisme d'embrayage (6), en étant notamment pourvue d'une zone de friction (27) apte à coopérer avec un disque d'embrayage (61).

5. Volant d'inertie (3) assemblé selon l'une quelconque des revendications précédentes, dans lequel le matériau (M2) de l'organe périphérique (20) d'inertie a une masse volumique deux fois supérieure ou égale à celle du matériau (M1) de l'organe central (10), notamment 2,5 fois supérieure ou égale à celle du matériau (M1),
l'organe central (10) étant notamment réalisé en aluminium, et/ou
l'organe périphérique (20) étant notamment réalisé en acier.

6. Volant d'inertie (3) assemblé selon l'une quelconque des revendications précédentes, dans lequel l'organe périphérique (20) d'inertie est différent de l'organe central (10) en ce qu'il comprend au moins :
- un matériau (M2) de masse volumique comprise entre 6,8 à 7,4 ; et/ou
- un volume strictement supérieure à celui de l'organe central (10); et/ou
- une épaisseur (Ep2, Ep2') strictement supérieure à celle de l'organe central (10); et/ou
- une forme allongée, notamment une géométrie en périphérie externe bien plus allongée que celle de l'organe central.

7. Volant d'inertie (3) assemblé selon l'une quelconque des revendications précédentes, dans lequel les organes central (10) et périphérique (20) d'inertie comprenant chacun des moyens de positionnement (3C, 3P) et de fixation (3F) coopérant conjointement, de manière à les fixer solidairement ensemble.

8. Volant d'inertie (3) assemblé selon la revendication précédente, dans lequel au moins certains des moyens de positionnement (3C, 3P) de chaque organe (10, 20) présentent :
- une première surface d'appui axial (31C, 31P),
- une surface cylindrique (32C, 32P) qui est axialement bordée par, d'une part la première surface d'appui axial (31C, 31P), et d'autre part une seconde surface d'appui (33F, 34F) d'un moyen de fixation (3F).

9. Volant d'inertie (3) assemblé selon la revendication précédente, dans lequel les moyens de fixation (3F) des organes central (10) et périphérique (20) sont réalisés de manière :
- démontable, par exemple par coopération de formes et/ou insertion d'une série de vis, boulons ou rivets (90) ; ou
- indémontable, par exemple par renflement obtenu par refoulement de matière d'un organe (10) en direction de la première surface d'appui axial (31C) correspondante.

10. Volant d'inertie (3) assemblé selon l'une quelconque des revendications 7 à 9, dans lequel
- les organes central (10) et périphérique (20) d'inertie, et notamment les moyens de positionnement (3C, 3P), sont réalisés par moulage ou par matriçage ou par estampage, et/ou
- les moyens de positionnement (3C, 3P) desdits organes (10, 20) coopèrent conjointement par coopération de formes, emboitement ou emmanchement ; et/ou
- les organes central (10) et périphérique (20) d'inertie comprennent chacun au moins deux moyens de positionnement (3C, 3P) et de fixation (3F, 3F') répartis angulairement autour de l'axe (X) de rotation,

11. Volant d'inertie (3) assemblé selon l'une quelconque des revendications 7 à 10, dans lequel au moins un des organes (10, 20) comprend au moins certains moyens de positionnement (3C, 3P) réalisés sous forme:
- de lobes ou pattes (19, 29) pourvue chacune d'au moins un orifice (13) formant les moyens de fixation (3C), et/ou
- de couronne (19') de centrage, pourvue d'au moins deux orifices (13) formant les moyens de fixation (3C), et/ou
- de logement (28) additionnel, comprenant notamment une portée de centrage (280) cylindrique et une surface d'appui axial (281) discontinue, à l'intérieur duquel sont reçus d'autres moyens de positionnement.

12. Module amortisseur de torsion (M) pour un engin de mobilité, comprenant au moins un volant d'inertie dont un volant d'inertie (3) assemblé selon l'une quelconque des revendications précédentes, l'organe central (10) dudit volant d'inertie (3) assemblé étant fixé solidairement en rotation à un vilebrequin (1), et l'organe périphérique (20) d'inertie dudit volant d'inertie (3) assemblé étant fixé solidairement en rotation à un mécanisme d'embrayage (6) ou à un système d'amortissement primaire (S).

13. Procédé de fabrication d'un volant d'inertie (3) assemblé, comprenant les étapes suivantes :
a) Fournir :
- un organe central (10), d'axe (X) de révolution, et
- un organe périphérique (20) d'inertie, ayant une masse volumique strictement supérieure à celle l'organe central (10), chacun des organes central (10) et périphérique (20) d'inertie étant pourvu de moyens de positionnement (3C, 3P) ;
b) Mettre en appui axial de l'organe central (10) sur l'organe périphérique (20) d'inertie, de telle manière à disposer axialement en regard les moyens de positionnement (3C, 3P) des organes (10, 20) ;
c) Fixer solidairement les organes central (10) et périphérique (20) par des moyens de fixation (3F, 3F'), notamment au niveau desdits moyens de positionnement (3C, 3P), au moins certains des moyens de fixation (3F, 3F') étant rapportés ou issus de matière avec l'un ou l'autre des organes (10, 20).
